# EUROPEAN PATENT APPLICATION

(11) **EP 3 002 415 A1**
(43) Date of publication of application: **06.04.2016**
(21) Application number: 14187066.7
(22) Date of filing: 30.09.2014
(51) Int. Cl.: F01D 9/02, F01D 25/08, F01D 25/12, F01D 25/24, F02K 1/82, F23R 3/00

(54) **Turbomachine component, particularly a gas turbine engine component, with a cooled wall and a method of manufacturing**

(71) Applicant: Siemens Aktiengesellschaft, 80333 München (DE)
(72) Inventor: Lörstad, Daniel, 61233 Finspang (SE); Öfverstedt, Tomas, 58248 Linköping (SE)

(57) **Abstract**

The invention is directed to a turbomachine component (10), particularly a gas turbine engine component, comprising at least one part (2) built in parts from a curved or planar panel (11), particularly a sheet metal, the part (2) comprising a plurality of cooling channels (3) via which a cooling fluid (5), particularly air, is guidable, wherein at least one of the plurality of cooling channels (3) has a continuously tapered section (8).

The invention furthermore is directed to a gas turbine engine equipped with such a component and a method of manufacturing.

## Description

### Field of the invention

The invention relates to a turbomachine (or rotating machine) component, particularly a gas turbine engine component in a hot region of a gas turbine engine, in which cooling channels are present to cool a hot surface.

### Background of the invention

Gas turbine engines like other rotating machines comprise sections wherein a cool fluid is guided and other regions in which a hot fluid is guided through the engine. In the gas turbine engine typically ambient air as a fairly cool fluid may be compressed by a compressor section and provided to a combustor in which the substantially cool fluid (at least cooler than the working conditions within the combustor) will be burned together with fuel to provide a driving force for a subsequent turbine section in which a hot fluid from the combustor will drive rotor blades of the turbine to drive again a shaft.

In the combustor or in the downstream sections past the combustor hot temperatures can occur on components that are guiding the hot fluid through the gas turbine engine. The temperatures can be up to 1,500 °C. Nevertheless, materials used typically in a gas turbine engine cannot withstand temperatures above 800 °C. Therefore, these components may need to be cooled or a specific coating is required to protect the component. Cooling may be implemented in a way that a fraction of the air or the fluid from the compressor is extracted - i.e. branched off from a main fluid path - and guided to the component which needs to be cooled. Cooling then can be performed at the to be cooled part by different measures, for example impingement cooling, film cooling, effusion cooling, transpiration cooling and/or convection cooling.

The provision of cooling functionality on the other hand reduces the efficiency of the gas turbine engine. Therefore it is the goal to limit the cooling as much as possible so that the efficiency does not downgrade and is maximised. On the other hand, the lifetime of the component depends largely on that the component will not experience a temperature that goes above an designed temperature level.

The temperature level experienced by a component may vary at different locations of the component. For example an upstream region of a combustion liner wall may experience hotter temperatures than a downstream region of the same combustion liner. Therefore, the downstream region may not require the same amount of cooling as the upstream region. On the other hand, a cooling channel of a specific length may be more efficient at a first end of the cooling passage as there the cooling air may be cooler than at a downstream end of the cooling passage after which the cooling air has taken the heat from the to be cooled component.

Components to be cooled in a gas turbine engine are substantially parts in the combustion chamber, the turbine section and the transition piece, i.e. a transition duct located between the combustion chamber and the turbine section. Patent application US 2006/01300484 A1 shows a transition duct of a gas turbine engine in which cooling passages are present within the transition duct wall. Furthermore cooling holes are also shown in the wall. Besides, the patent US 6,809,148 B2 shows more complex cooling channels within a transition duct of a gas turbine engine in which the cooling channels follow kind of a serpentine path within a transition duct wall.

### Summary of the invention

The present invention seeks to provide an improved way of cooling hot components in a gas turbine engine or other turbomachines or rotating machines or even other machines that experience life-limiting temperatures.

This objective is achieved by the independent claims. The dependent claims describe advantageous developments and modifications of the invention.

According to the invention, a turbomachine component (or rotating machine component), particularly a gas turbine engine component, is provided comprising at least one part (i.e. a sub-component) built in parts from a curved or planar panel or from a curved or planar plate, particularly a sheet metal, the part comprising a plurality of cooling channels via which a cooling fluid, particularly air, is guidable, wherein at least one of the plurality of cooling channels has a continuously tapered section.

The cooling channel therefore shows a transformation of its cross-sectional area along its length.

The tapered section may be permanently tapered between an inlet port and an outlet port. It may be permanently tapered from the inlet port to the outlet port. The cooling channel may be constantly tapered or variably tapered.

The part may particularly be located in a combustion chamber, in a burner section, in a transition duct or in a turbine section of a gas turbine engine. The cooling channels are present to provide the cooling of the part which is affected by the hot-working media which is in contact with at least one surface of the part. The cooling fluid may particularly be air taken from a compressor section of a gas turbine engine. But other sources of cooling fluid could be used, e.g. ambient air. The cooling fluid may be pressurised in the cooling channels.

The tapering of the cooling channels will allow adaptations to the heat increase of the cooling fluid within the individual cooling channel. The tapering will have the effect that the cooling fluid velocity in the channel will increase in the regions where the cross section of the cooling channels will decrease, i.e. in the direction of the taper. As a consequence, the cooling effect, which otherwise would degrade along the length of the cooling channel, will stay substantially equally effective.

The cooling effect generally is driven by the heat transfer coefficient, the temperature difference and the contact area between a metal component and cooling air within the cooling channels. The heat transfer coefficient is generally dependent on the cooling air velocity in the channel. Therefore by changing the channel cross section area (also to be called cross section width or cross section expanse), the velocity and consequently the heat transfer coefficient can be specifically controlled. Thus, the effect of higher cooling air velocity can compensate both for higher air temperature and less contact surface, up to a certain level.

The term "tapered section" used herein to define that the cross sectional area of such a channel is reduced. The cross sectional area is taken perpendicularly to the fluid flow direction of the cooling air within the cooling channel. There may be sub-sections though, in which the cross-section stays constant.

With the term "continuously" tapered a configuration is defined in which there is not one sub-section in which the cross sectional area will stay constant or even expand.

With the term "section" at least a substantial part of the cooling channel length is identified, possibly at least 30% of the length of the cooling channel, at least 50% of the length of the cooling channel, at least 70% of the length of the cooling channel, or at least 90% of the length of the cooling channel. In some embodiments the "section" may identify the complete length of the cooling channel, i.e. from an inlet to an outlet.

A cooling "channel" according to the invention is particularly a fairly narrow duct in relation to its length. The length may be for example more than 10 or 20 times - possibly more than 50 or 100 times - longer than a medium width of the channel.

The part may be a complex three dimensional component. Nevertheless, it may have at least a section in which it has a plate-like appearance, possibly curved around a hot working gas passage. A panel or plate may be a solid element but may also be built from a sheet metal and formed into the wanted shape. The part may be built from metal or any other heat conductive element. The cooling channels may be built in the part such that the channel is surrounded by material of the part to form a passage through the part. The part may have an inlet and an outlet for each of the cooling channels. The inlet may typically be located at a first surface that is opposite to another - second - surface that is directly affected by the hot working media, which may be gas or liquid or a mixture of gas and fluid. An outlet may typically be located in the wall that is facing the hot working media, i.e. in the second surface. Cooling air can be provided from the compressor via pipes or via some kind of passages or channels to these inlets for the cooling channels and the cooling air exiting the cooling channels will mix into the hot working media.

As explained, the tapering has the effect to counteract the heat increase of the cooling air within the cooling channel. If the part itself experiences a hotspot due to local hotspots at the surface of the part facing the hot working media, it may be advantageous to have the most narrow part of the cooling channel in the region of this local hotspot. Therefore, the tapered section may be followed by a further section in which the passage is expanded or widened again, or at least remains constant in cross-sectional area.

A cross section may be taken in particular perpendicular to a line defined by the center of the cross-sectional area throughout the length of the cooling channel.

According to an embodiment, the part may be substantially a flat element which forms the hot working media passage. In that flat surface, i.e. in its major or main expanse, the cooling channel will be located. Particularly, the tapered sections of the cooling channels will be located in that area. The cooling channels may be arranged substantially in equidistant distance to the hot working media surface.

The cooling channel may be formed in the main plane of the substantially flat section of the component such that the coolant flows substantially parallel to the main plane.

In other words, in the latter embodiment, a tapered section has a longitudinal axis and the longitudinal axis lies in the plane of the panel or plate. The longitudinal axis may be straight or curved.

In a preferred embodiment, the cooling channels will be oriented along the direction of the fluid flow of the working media which passes along the part during operation. Alternatively - but possibly less effective -, the cooling passages may also be oriented in another way, for example perpendicular to the fluid flow of the working media, or angled, relative to the direction of the fluid flow of the working media.

In a preferred embodiment, the tapered section will expand from an inlet to an outlet throughout the full length of the cooling channel. In an alternative embodiment, there may be further sections in which the passage may stay constant in relation to their cross sectional area. If there are constant sections of cross-sectional areas along the cooling channel length, these constant parts shall be limited to about 20% or to 30% of the complete length of the individual cooling channel.

Based on which manufacturing method is used to build the cooling channels into the part, it may be advantageous that the cross section of the cooling channels will be rectangular or square. The tapering then may occur by reducing the distance or separation of opposite walls of the rectangular cross section. The narrowing of the opposite walls may happen only in one orientation and the other walls may be kept at the same distance apart or in both directions such that all four walls of the cooling channels are reducing their distances pairwise to another. It may be advantageous to keep the width of the channel, which is opposite to the hot working media, constant and only change the height of the cooling channel which is the height perpendicular to the main fluid flow, so that the cooling effect of the part in respect to the heating due to the hot working media is not negatively affected. "Width" in this respect means the expanse of the channel of one wall that is substantially parallel to the hot surface of the part. "Height", as said, means the expanse in a direction perpendicular to the hot surface of the part or major plane of the component.

As previously mentioned, a rectangular cross section is proposed as one embodiment for at least one of the cooling channels. Alternatively also more complex geometries can be used for the cooling channels. For example triangular cross sections or any type of cross section could be used as long as there is an advantage and an effect on the cooling and as long as this can be manufactured by known manufacturing methods. If selective laser melting or selective laser sintering techniques are used almost any type of structure could be designed for a cooling channel.

The rate of tapering or the rate of change of cross-sectional area of the cooling channel width may specifically be adapted to the heat distribution to be experienced by the part when assembled in the rotating machine and during operation. Particularly the heat flux may be kept substantially constant throughout the channel. This would guarantee that no section of the component may experience a too high metal temperature.

In an embodiment the rate of tapering may be adapted proportionally to a temperature rise of the cooling fluid within the at least one of the plurality of cooling channels during operation. The tapering may be to the extent such that temperatures of the part taken at different locations of the expanded region of a part is substantially the same at different locations at the channel.

A part may be produced via laser sintering or laser melting techniques. It could also be formed by superplastic deformation and subsequent diffusion bonding. Alternatively a part may also be comprised from a number of sheet metals that are joined together in a sandwich type manner. In such a sandwich type manner the intermediate layer will include the tapered cooling channel. The outer panel may only show the inlet and/or outlet ports for the cooling channel. In such a sandwich type approach, it may be easy to create a tapered channel which performs the tapering only in one direction by using a cutting disk during manufacturing which is lowered in height continuously such that the cut will widen. If the tapering shall be performed in both directions of the rectangular or cooling channel, also the upper and lower plates of the sandwich approach may need to be affected by the cutting disk by simply providing elongated depressions in the surface of the plates but not cutting completely through the plates. In this case the cutting disk may be lowered continuously to form a depression with differing depth. After joining the different plates the widened part of the cooling channel will be formed.

Alternatively, two sheet metals may be sufficient to manufacture the part. This is achieved by machining the channel and a hole in a thicker metal plate and only a hole in a thinner sheet metal. In this configuration the channel is not a full cut through the plate but only the surface is machined.

As already indicated, the invention is also directed to a manufacturing method to produce such a rotating machine component. Furthermore, the invention is also related to a rotating machine which includes such a rotating machine component which is defined by tapered cooling channels. Besides, the invention is also directed to a gas turbine engine including such an element with tapered cooling channels.

A manufacturing method of a part of a turbomachine component, particularly a gas turbine combustion component, may comprise the steps of:
- proving at least three panels of sheet metal;
- drilling holes into a first one of the three panels of sheet metal as inlet ports for a plurality of cooling channels;
- drilling holes into a second one of the three panels of sheet metal as outlet ports for the plurality of cooling channels;
- cutting slots into a third one of the three panels of sheet metal to define the plurality of cooling channels, wherein at least one of the slots comprises a continuously tapered section;
- bonding the first panel with a first surface of the third panel and the second panel with a second surface of the third panel to form at least one sub-section of the part.

Alternatively, a manufacturing method of a part of such a turbomachine component may comprise the steps of:
- proving at least two panels of sheet metal;
- drilling holes into a first one of the at least two panels of sheet metal as inlet ports for a plurality of cooling channels;
- drilling holes into a second one of the at least two panels of sheet metal as outlet ports for the plurality of cooling channels;
- cutting slots into the first one or the second one of the at least two panels of sheet metal to define the plurality of cooling channels, wherein at least one of the slots comprises a continuously tapered section;
- bonding the at least two panels to form at least one sub-section of the part in which the inlet ports each are aligned with the cooling channels and in which the outlet ports each are aligned with the cooling channels.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### Brief description of the drawings

Embodiments of the invention will now be described, by way of example only, with reference to the accompanying schematical drawings, of which:
- FIG. 1:: shows a longitudinal section of a section of a typical gas turbine transition duct;
- FIG. 2:: shows illustration of known cooling air channels in a to be cooled component;
- FIG. 3 to 6:: show different of illustrations of embodiments of cooling air channels in a to be cooled component according to the invention;
- FIG. 7:: shows an exploded illustration of several layers forming a to be cooled component according to the invention.

The illustrations in the drawings are schematical. It is noted that for similar or identical elements in different figures, the same reference signs will be used to denote the same or equivalent features.

Some of the features and especially the advantages will be explained for an assembled gas turbine, but obviously the features can be applied also to single components of the gas turbine but may show the advantages only once assembled and during operation. But when explained by means of a gas turbine during operation none of the details should be limited to a gas turbine solely while in operation. As the invention is inspired to counteract problems of combustion processes, the features can also applied to different types of machines that comprise a combustor of a different type, e.g. a combustor that operates with different types of fuels differing from gas and/or oil typically provided to a gas turbine combustor.

### Detailed description of the invention

A gas-turbine engine may serve as one example of a rotating machine. The gas turbine - short for gas-turbine engine - comprises an air inlet at one end followed by a compressor stage in which incoming air is compressed for application to one or more combustors as combustion devices, which may be annular or so-called can-annular or silo type, the latter being distributed circumferentially around the turbine axis. Fuel is introduced into the combustors and there is mixed with a major part of the compressed air taken from the compressor. Hot gases with high velocity as a consequence of combustion in the combustors are directed to a set of turbine blades within a turbine section, being guided (i.e. redirected) by a set of guide vanes. The turbine blades and a shaft - the turbine blades being fixed to that shaft - form the rotor and are rotated about an axis as a result of the impact of the flow of the hot gases. The rotating rotor (or another rotor) also rotates blades of the compressor stage, so that the compressed air supply to the combustors is also provided by the rotor (including the used blades and vanes) once in operation. There may be more than one rotor in the gas-turbine engine.

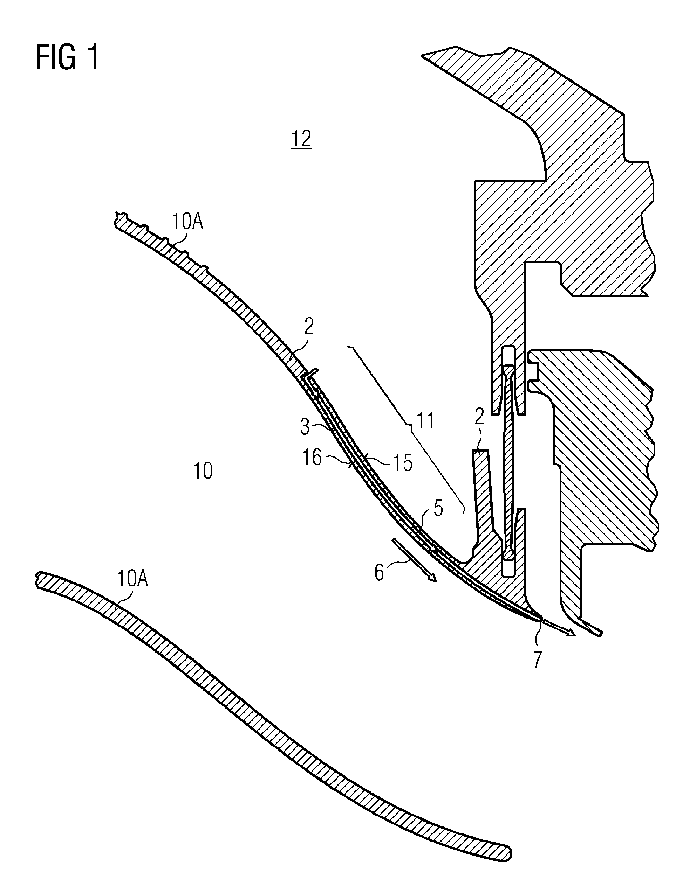

As an example of a rotating machine component a transition duct 10 is shown in figure 1, which shows a cross sectional view of a section of such a transition duct and other parts of the gas turbine in that region. The transition duct 10 may provide a transition from a combustion chamber to a downstream turbine section. The turbine section is annular. The combustion chamber section may for example be annular as well or can-annular (i.e. formed by a plurality of combustor cans all arranged about an axis). In the latter case the transition duct will perform a transformation from a plurality of elliptical or oval cross sections (at the combustor end) to a single annular cavity (at the turbine section end) for guiding the working fluid. A transition duct of the latter type is shown in the previously mentioned patent publication US 2006/0130484 A1. The transition duct 10 comprises a transition duct shell 10A which has an inner surface for guiding the hot working fluid and having an outer surface which may be directed to a cavity in which a cooling fluid may be present. This cavity may be called a cooling air cavity 12. Whereas the hot working fluid within the transition duct 10 is provided by the combustion chamber(s) which is/are located upstream of the transition duct 10, the cooling air cavity 12 is provided with cooling air from the compressor (not shown in the figure). The transition duct shell 10A comprises a part 2 in which cooling channels 3 are incorporated. In the cross sectional view of figure 1, which is a cross section along the axis of rotation of the rotating machine, only one cooling channel is depicted but typically a plurality of cooling channels will be arranged distributed over the part 2. The part 2 may be a complex structure which at least comprises one plate 11 which preferably is curved in axial direction (like in Fig. 1) and also curved around the path for the working media in circumferential direction. The plate 11 may substantially be fairly thin material, i.e. with larger expanse in one direction and small expanse in width. Particularly a curved or contoured plate 11 may be made from sheet metal and formed into the desired form. The part 2 comprises a plurality of cooling channels 3 via which cooling fluid from the cooling air cavity 12 can be guided through the part 2 and eventually be injected into the working media stream. Cooling fluid within the cooling channel 3 is identified in the figure by reference sign 5. The hot working fluid within the main gas path is identified in the figure by reference numeral 6. The cooling channel 3 has an inlet port 1 which allows cooling fluid from the cooling air cavity 12 to enter the cooling channel 3. Furthermore, the cooling channel 3 has an outlet port 7. A first surface 15 of the plate 11 is also shown in the figure and is directed to a cooled side, i.e. facing the cooling air cavity 12. The opposite surface of the plate 11 is a second surface 16 and is facing the hot working media within the transition duct 10. The cooling channel 3 (also called cooling duct) can be a prior art cooling duct with an unmodified cross section as substantially shown in figure 1 or could be the cooling channel 3 according to the invention with a continuously tapered section. This will be explained further in the following figures as the tapering can not clearly be highlighted in figure 1 which is supposed to show the general configuration of the inventive components.

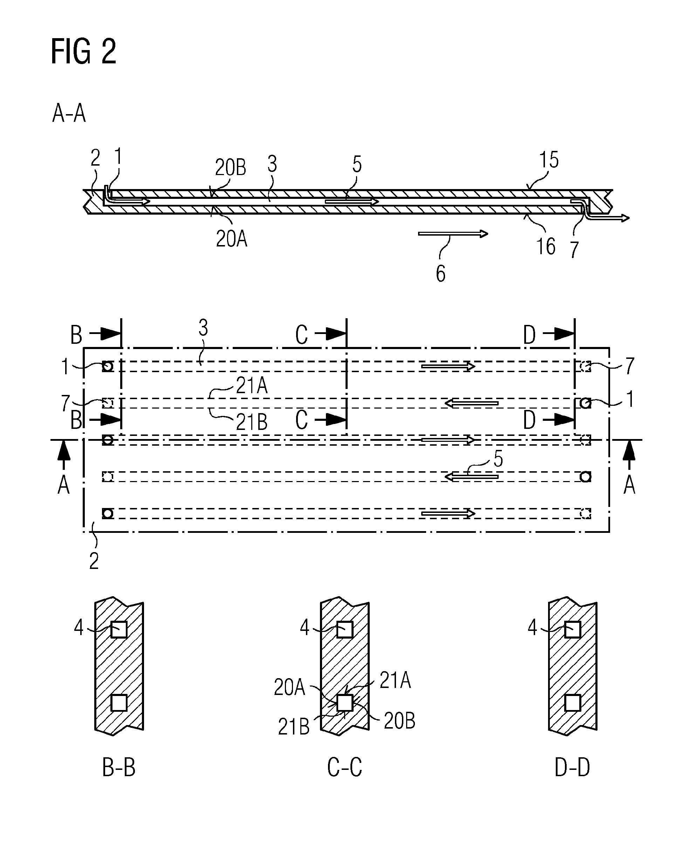

Figure 2 - including its different sketches - shows cross sectional views and also a top view as seen from the first surface 15 for a prior art configuration without a tapered section. A top view shows the inlet port 1 and indicating the outlet port 7 and also indicating the cooling channels 3 wherein the parts that are included internally in the part 2 or which can not be seen from the first surface 15 are only shown as dotted lines. Several cross sectional views are taken along lines A-A, B-B, C-C and D-D. The cross section taken along the line A-A may be a similar view as seen in figure 1, only the curvature of figure 1 is not shown in figure 2. A cross section taken along the planes B-B, C-C, D-D are planes perpendicular to the view of the cut A-A. Along the cut A-A, a cooling channel 3 is shown with the inlet port 1 and the outlet port 7 with a cooling fluid 5 flow within the cooling channel 3 from the inlet port 1 to the outlet port 7. The first surface 15 directed to a cooled side and also the second surface 16 directed to the hot working media is identified in the figure of the cut A-A. The different cuts at the planes B-B, C-C, D-D show that the cross sectional areas which are identified by a first pair of surfaces 20A, 20B and a second pair of surfaces 21A, 21B are identical at each of the locations B-B, C-C, D-D. In figure 2 the cross sections are also identical for several of the parallel cooling channels 3 (five cooling channels are shown in figure 2 but typically more would be present in the part 2 to allow cooling over the full circumference of the plate 11). This unmodified cross-section reflects the prior art. As one example, which is also shown in figure 2, one of the cooling channels will provide cooling air in one direction and a second cooling channel will provide cooling air in an opposite direction. This may improve the overall cooling quality of the hot part 2 in this configuration.

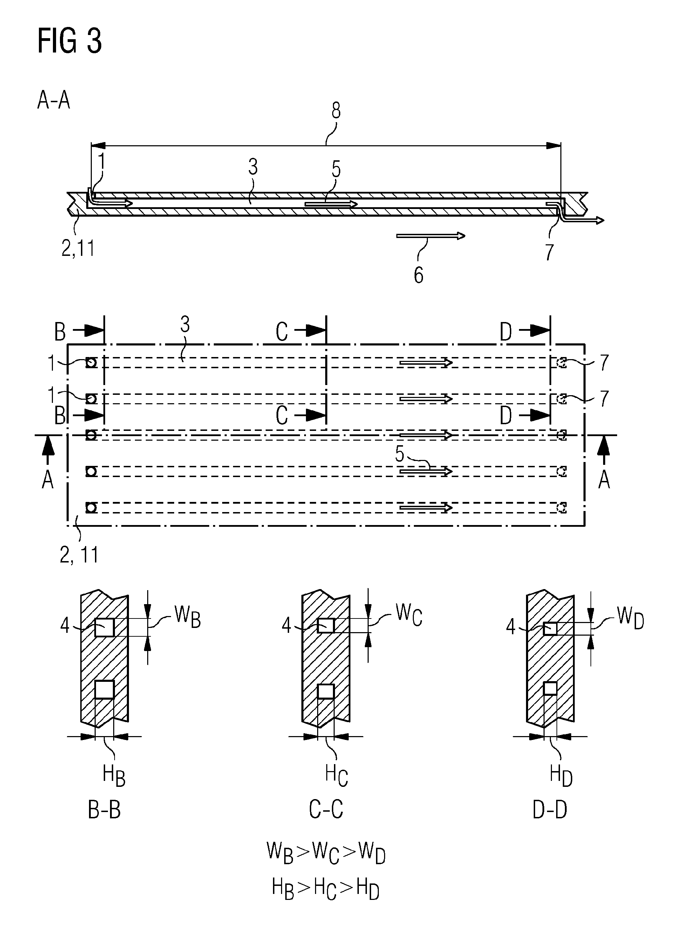

Referring now to Figure 3 which shows a configuration according to the invention in which a tapered section 8 is present in the cooling channel 3. In figure 3, the tapered section 8 will be present over the whole length of the cooling channel 3 between the inlet port 1 and the outlet ports 7. In a not shown embodiment the length of the tapered section 8 may only be a sub-section of the cooling channel 3 length. In the example of figure 3, all shown cooling channels are filled with cooling air flowing in the same direction meaning that at one end of the plate 11, the inlet ports 1 will be located, and at a second end of the plate 11, the outlet ports 7 will be located. As can be seen in the cut along plane A-A but also along the cuts along B-B, C-C, D-D a height H of the cooling channel cross section will be reduced from the location at or near the inlet port 1 in direction to the location C-C and continues to be reduced up to a downstream end of a cooling channel 3 at a location D-D close to the outlet port 7. Also the width of the cooling air channels W will be reduced in size from B-B via C-C to the location of D-D. Therefore, the cross sectional area is continuously tapered along the length of the cooling channel 3. The cross sectional area is indicated by the reference numeral 4. In the example of figure 3, the cross sectional area is of square shape - or could also be rectangular - and will be reduced in size in both directions width and height, so that in every cross sectional view the cross section of the cooling channel 3 has a shape of a square. Therefore, the overall shape of the cooling channel 3 is substantially a truncated pyramid with four faces, considering plate 11 is flat (which may not be the case in a real component). Obviously it has to be understood that figure 3 is a simplification in which the cooling channel 3 is located within a flat plate. Nevertheless, in reality the cooling channel 3 may be curved as described with reference to figure 1.

It is assumed now that the hot air, which is indicated by an arrow with reference numeral 6, is guided in parallel (and in the same direction) to the cooling fluid 5 along or over the surface 16 from a region B-B to a region D-D. That means in the region B-B a higher temperature is affecting the part 2 and therefore also affecting a cooling fluid temperature within the cooling channel 3, that will rise in consequence. While the cooling fluid temperature rises along the cooling channel 3 from A to B the cross section of the cooling passage or cooling channel will be decreased. This has the effect that the cooling fluid will accelerate. That also means that at a location C-C a constant cooling air mass flow with higher velocity is passing that position C-C but having at the same time already a higher temperature level than at location B-B. All in all, considering also the narrowed size of the cooling channel 3, at position C-C the cooling capacity of the cooling air can remain substantially at the same level as in location B-B such that the part 2 is sufficiently cooled at both locations B-B and C-C. The same effect continues further on until D-D such that the cross sectional area 4 furthermore continues to be tapered and furthermore the temperature rises within the cooling channel 3, but nevertheless due to the higher speed, the heat transfer coefficient will rise and the cooling effect will remain at the higher level.

Altogether, this variable cross section area of internal cooling channels 3 enables the internal cooling channels 3 to provide an efficient cooling technique particularly for applications where it may be impossible or difficult to alternate the channel flow direction as shown in figure 2 or to implement other means of cooling. Variable cooling channel 3 size also enables an efficient way of handling hot spots or cool spots within the component which will be explained later on in relation to a further figure.

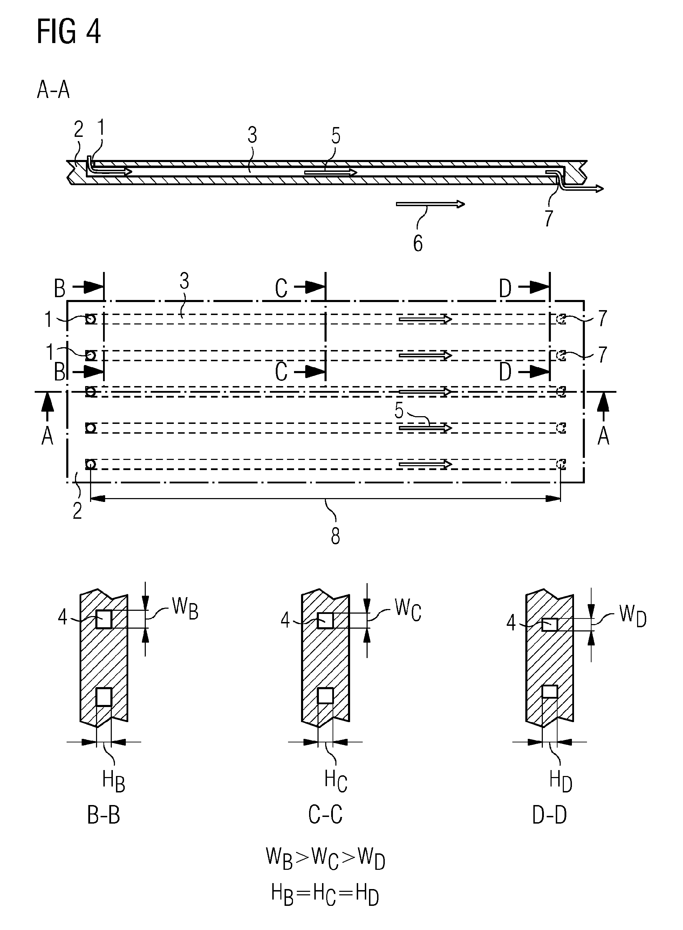

According to figure 4 an alternative to figure 3 is shown in which the height of the cooling channel 3 remains identical along the length of the cooling channel 3 which is also seen in the cross sectional view of the figures B-B, C-C, D-D. In this alternative embodiment, only the width of the cooling air channel is modified such that the width W_{B} at the location B-B is greater than the width W_{C} at a location C-C and the latter is again greater than the width W_{D} at a location D-D. Therefore, figure 4 shows a cooling channel 3 with rectangular cross section in which only one dimension of the rectangular is modified in size. In consequence the cooling channel 3 is tapered, but only in respect of one direction.

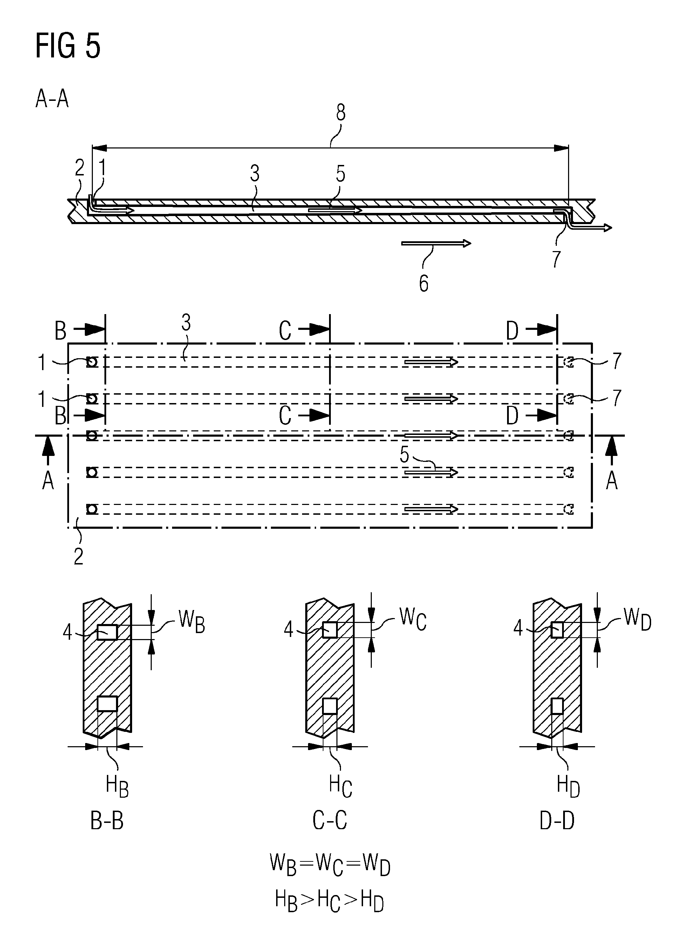

Figure 5 shows a similar implementation but in which the rectangular cross section of a cooling channel 3 is modified in the other direction by modifying the height. As seen in the figure, the width W_{B} is identical to the width W_{C} and the width W_{D}. The height H_{B} at location B-B is greater than the height H_{C} at the location C-C which is again greater than the height H_{D} at the location D-D. Again, the cross section of the cooling channel 3 is continuously tapered.

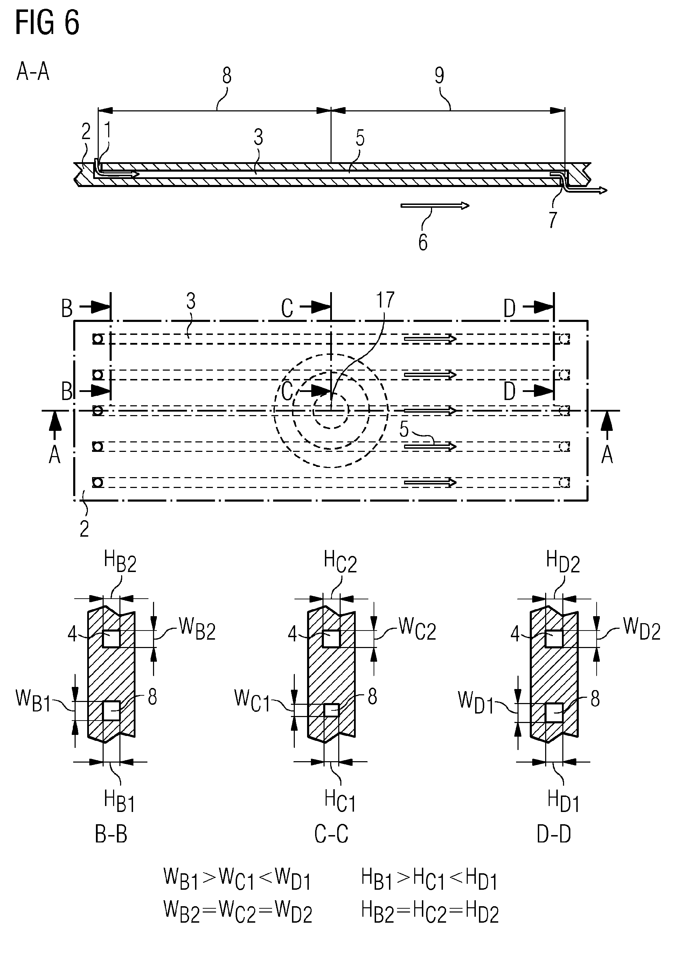

In figure 6, generally a similar configuration is shown, in which a local hotspot 17 is supposed to be present during operation. The local hotspot 17 may be present always at the same location due to the arrangement of the combustor or due to other constructional features. Therefore it may be possible to construct the part 2 such that the cooling is improved at and/or near the region of the local hotspot 17. This is realized as explained in accordance with figure 6. According to figure 6, a continuously tapered section 8 is present continuing to reduce the cross sectional area of the cooling channel 3 until the region where the hotspot is located and afterwards - i.e. downstream - the tapering is not continued in the same direction but the cooling channel 3 is widened again in a widening section 9 (you could also say, section 9 shows a tapering but opposite to the flow direction within the cooling channel 3).

The term "widening", like "tapering", is intended to mean a change of size in respect of the cross section of the cooling channel 3.

Tapering and widening is meant in the sense of convergent walls followed by divergent walls of the cooling channel 3. Optionally a section with constant cross sectional area may be present.

This configuration of Figure 6 allows an increased cooling fluid velocity in the area of the local hotspot 17 within the cooling channel 3. This allows in turn providing an improved way of cooling, particularly in regions where more or additional cooling is required. This additional cooling can be performed without injecting a higher amount of cooling air into a cooling channel 3. In figure 6 also another change compared to the previous figures is shown. It is shown that a cooling channel which is closer to a hotspot may have such a consecutive tapering and widening structure whereas a cooling channel which has a distance to such a local hotspot 17 may have a continuous cross sectional area along the length of the cooling channel 3. So the shape of several cooling channels 3 are not identical anymore, different to the shown exemplary embodiments of the figures 2-5 in which all cooling channels 3 are sized similarily for all cooling channels 3 in the part.

As there are typically several cooling channels 3 in one part 2, there may be at least one cooling channels 3 of these several cooling channels 3 that has a different cross-sectional area shape throughout its length than the remaining cooling channels 3.

Such individually shaped cooling channels 3 may individually be generated if the part 2 is built by additive manufacturing techniques like selective laser melting or selective laser sintering or direct laser deposition. These methods allow the creation of all kinds of complex shapes for these cooling channels 3. Also the cross section does not need to be rectangular or square when these techniques are used. Different forms of cross sectional shapes can be provided by these additive manufacturing techniques, e.g. ovally or circularly shaped cross sections of the cooling channels 3, leading to cylindrical cooling channels in which the tapering can be realised by reducing the radius of the cylinder.

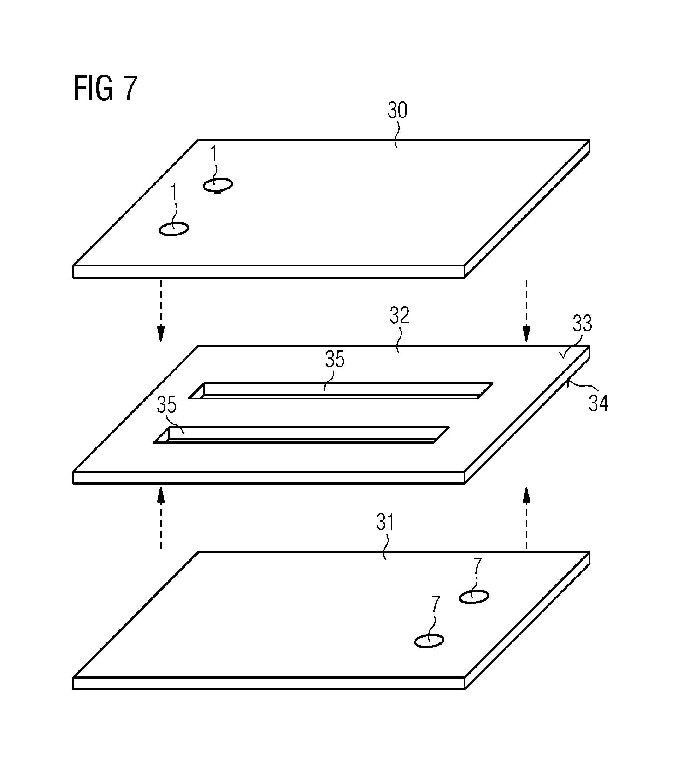

Figure 7 shows a different way of machining these types of tapered cooling channels 3. In this embodiment, three layers or panels of sheet metal are provided and machined and combined together thereafter. On a first panel 30, the inlet ports 1 will be drilled or machined or cast. On a second panel 31, outlet ports 7 can be drilled or machined or cast as well. On a third panel 32, which is an intermediate panel or a mid panel, which in the end will be located between the first panel 30 and the second panel 31, slots 35 will be manufactured to implement the cooling channels 3. The slots may be formed by a cutting machine, for example via a cutting disk such that the cutting disk will be lowered into the material continuously while the cutting disk is moved along the surface such that the slot width will be widened while the cutting disk is lowered into the third panel 32. The slots shall be positioned in alignment with the cooling inlet ports 1 and the cooling outlet ports 7 of the first panel 30 and the second panel 31. Finally, these three sheet metals 30, 31, 32 can be attached or joined to one another in a sandwich type manner - e.g. by diffusion bonding or hot isostatic pressing - such that these three layers will generate the plate 11 as mentioned for the previous figures. This plate 11 may be planar at a first processing step but may be later formed into the proper curved surface area as required, for example for the transition duct.

The sandwich processing will be performed in a way that the first panel 30 is attached to a first surface 33 of the intermediate panel 32 and a second panel 31 is attached to a second surface 34 of the intermediate panel 32.

The explained method as explained in accordance with figure 7 allows only tapering in one direction of the cooling channel, namely the width of the cooling channel. If tapering in two directions (width and height) would be required, additional depressions with reducing depth in the first and second panel 30, 31 could result in a height reducing cross section. The depressions would need to be aligned with the tapered slot of the third panel 32 so that altogether they will form the cooling channel.

As an alternative - but not shown in a figure - the 3 layer sandwich structure can also be replaced by a two layer sandwich structure, in which on layer comprises the inlet holes and the cooling channels (alternatively the outlet holes and the cooling channels). The cooling channels will not be full cuts through the material but just end milled (or produced by an alternative method), such that a lengthy depression is manufactured with differing depth and/or width of the depression.

Previously the invention was explained in conjunction with a transition duct 10. Other elements of a gas turbine engine or other types of rotating machine that experience strong heat can also be equipped with these tapered cooling channels. For example in a gas turbine engine, a combustion chamber liner can be equipped with these type of cooling channels. Also heat shields, for example use in the combustion chamber or at the turbine section of a gas turbine engine, can be equipped with these cooling channels. Furthermore the invention can be applied for exhaust nozzles in gas turbines or turbine shrouds. Besides, the invention can also be used for a casing located in a hot region of an engine.

Beyond that, other types of machines can use this inventive feature to provide an additional cooling as long as cooling air may be provided to that component. As a gas turbine engine has a compressor included into the system in which air is compressed which can be used also as cooling air, the invention is specifically advantageous to be incorporated in a gas turbine engine.

The invention is particularly advantageous as components can be cooled without needing excessive extra air. This is advantegeous as a reduction in the need of cooling air can improve the overall efficiency of the engine. The cooling can be implicitly be controlled by changing the width and/or the height of a cooling channel and not by actively injecting more or less cooling air into cooling channels. Therefore no other active control measure is needed. By changing the channel cross sectional area, the velocity of the cooling air within the cooling channel and consequently the heat transfer coefficient can effectively be controlled. The cooling effect is improved without the need of having additional extra cooling air, which otherwise would decrease the performance of the engine.

## Claims

1. Turbomachine component (10), particularly a gas turbine engine component, comprising at least one part (2) built in parts from a curved or planar panel (11), particularly a sheet metal, the part (2) comprising a plurality of cooling channels (3) via which a cooling fluid (5), particularly air, is guidable, wherein at least one of the plurality of cooling channels (3) has a continuously tapered section (8).

2. Turbomachine component (10) according to claim 1,
**characterised in that**
the tapered section (8) of the at least one of the plurality of cooling channels (3) is located in an area of a major expanse of the panel (11).

3. Turbomachine component (10) according to any of the preceding claims,
**characterised in that**
the at least one of the plurality of cooling channels (3) has an inlet port (1) from a first surface (15) of the panel (11) and an outlet port (7) for the cooling fluid (5) to another surface (16), particularly a surface opposite to the first surface (15), or to the first surface (15).

4. Turbomachine component (10) according to claim 3,
**characterised in that**
at least one of the inlet port (1) and outlet port (7) are generally perpendicular to a plane of the panel (11).

5. Turbomachine component (10) according to any of the preceding claims,
**characterised in that**
the at least one of the plurality of cooling channels (3) further comprises a continuously widening section (9), the widening section (9) being located downstream of the tapered section (8) in respect of a flow of the cooling fluid (5) during operation.

6. Turbomachine component (10) according to any of the claims 1 to 4,
**characterised in that**
the tapered section (8) of the at least one of the plurality of cooling channels (3) is permanently tapered between the inlet port (1) and the outlet port (7).

7. Turbomachine component (10) according to any of the claims 1 to 4,
**characterised in that**
the at least one of the plurality of cooling channels (3) further comprises at least one section with constant cross section (4) upstream of the tapered section (8) and/or downstream of the tapered section (8) and/or interrupting the tapered section (8),
wherein the tapered section (8) covers at least 80% of a length of the at least one of the plurality of cooling channels (3).

8. Turbomachine component (10) according to any of the preceding claims,
**characterised in that**
a cross section (4) of the at least one of the plurality of cooling channels (3) is rectangular, particularly square, and the at least one of the plurality of cooling channels (3) is formed by two pairs of surfaces (20A, 20B; 21A, 21B), the pairs of surfaces (20A, 20B; 21A, 21B) having surfaces substantially opposite to another.

9. Turbomachine component (10) according to claim 8,
**characterised in that**
tapering in the tapered section (8) is realised by reducing the distance of a first pair (20A, 20B) of the two pairs of opposite surfaces (20A, 20B; 21A, 21B) and/or a second pair (21A, 21B) of the two pairs of opposite surfaces (20A, 20B; 21A, 21B).

10. Turbomachine component (10) according to any of the preceding claims,
**characterised in that**
a rate of tapering is adapted to the heat distribution to be experienced by the part (2) during operation.

11. Turbomachine component (10) according to any of the preceding claims,
**characterised in that**
a rate of tapering is adapted proportionally to a temperature rise of the cooling fluid (5) within the at least one of the plurality of cooling channels (3) during operation, particularly such that temperatures of the part (2) taken at different locations of a region of the part (2) is substantially the same at the different locations and/or such that a heat flux or heat gradient within the at least one of the plurality of cooling channels (3) remains substantially constant.

12. Turbomachine component (10) according to any of the preceding claims,
**characterised in that**
the at least one part (2) comprises a fluid guiding surface (16) to guide a hot working fluid (6) in a turbomachine when the turbomachine component (10) is arranged in the turbomachine and the turbomachine is in operation.

13. A gas turbine engine component of a gas turbine engine, **characterised in that**
the part (2) according to claim 1 to 12 is located in a hot region of the gas turbine engine, particularly being at least one of a combustion chamber wall, a transition duct (10) downstream of a combustion chamber, a heat shield, an exhaust nozzle, and a casing, wherein the cooling fluid (5) is provided from a compressor of the gas turbine engine.

14. Manufacturing method of a part (2) of a turbomachine component (10), particularly a gas turbine combustion component, comprising the steps of:
- building up material via laser sintering or laser melting or direct laser deposition or superplastic forming to form the part (2) as defined according to claims 1 to 12 including incorporated cooling channels (3) having a continuously tapered section (8).

15. Manufacturing method of a part (2) of a turbomachine component (10), particularly a gas turbine combustion component, comprising the steps of:
- proving at least two panels (30; 31; 32) of sheet metal;
- drilling holes into a first one (30) of the at least two panels (30; 31; 32) of sheet metal as inlet ports (1) for a plurality of cooling channels (3);
- drilling holes into a second one (31) of the at least two panels (30; 31; 32) of sheet metal as outlet ports (7) for the plurality of cooling channels (3);
- cutting slots (35) into the first one (30) or the second one (31) or a third one (32) of the at least two panels (30; 31; 32) of sheet metal to define the plurality of cooling channels (3), wherein at least one of the slots (35) comprises a continuously tapered section (8);
- bonding the at least two panels (30; 31; 32) to form at least one sub-section of the part (2) in which the inlet ports (1) each are aligned with the cooling channels (3) and in which the outlet ports (7) each are aligned with the cooling channels (3).
